Europäisches Patentamt

European Patent Office

Office européen des brevets

(11) Publication number : **0 467 591 A2**

## EUROPEAN PATENT APPLICATION

(21) Application number : **91306290.7**

(22) Date of filing : **11.07.91**

(51) Int. Cl.⁵ : **G06F 15/40**

(30) Priority : **18.07.90 US 553506**

(43) Date of publication of application :
**22.01.92 Bulletin 92/04**

(84) Designated Contracting States :
**DE FR GB**

(71) Applicant : **AMERICAN TELEPHONE AND TELEGRAPH COMPANY**
**550 Madison Avenue**
**New York, NY 10022 (US)**

(72) Inventor : **Bournique, Richard F.**
**110 Monmouth Road BB-14**
**West Long Branch, New Jersey 07764 (US)**
Inventor : **Tu, Hai-Chen**
**5 Bingham Drive**
**Marlboro, New Jersey 07746 (US)**

(74) Representative : **Watts, Christopher Malcolm Kelway et al**
**AT&T (UK) LTD. AT&T Intellectual Property Division 5 Mornington Road**
**Woodford Green Essex IG8 OTU (GB)**

(54) Hypermedia arrangement using a window system and layered intrinsics.

(57)   An information management system having a hypermedia file that works with the X Window System and Xt Intrinsics is disclosed. The disclosd arrangement generates and uses a hypermedia information management system, which includes a windowing system and, responsive to a set of intrinsics, generates a set of widgets. A hypermedia file, which includes a hierarchical ordering of objects, such as hypermedia lines and hypermedia segments among the hypermedia lines, is generated. A specially encoded function with parameters for defining items sends a file to be included in a window, the location and size of the window in a display of the file, and a label for identifying the generated segment is used for controlling the display of information, whether pictorial, graphic, text, et cetera, or the execution of another program from the hypermedia file. A specially encoded function is also used for notifying a user of information from the hyperfile, the information being correlated to the particular detected one of the specially encoded functions.

EP 0 467 591 A2

# FIG. 3

RADIO COMPONENTS

RADIO SCHEMATIC

The basic

## TONE CONTROL

The Tone control may be used to generate tones at specific frequencies. The default setting is 2400HZ, which is what you are hearing now. The control may also be set for 600 HZ, and 4800 HZ.

POWER ON: TRANSMIT INDICATOR   OFF-VOLUME   SQUELCH   MONITOR   TONE

SQUELCH CONTROL LABELED ABOVE

## Background of the Invention

### Technical Field

This invention relates to information management systems and, more particularly, to an information management system having a hypermedia arrangement using a window system and layered intrinsics.

### Description of the Prior Art

The term "hypertext" refers to an arrangement that describes a nonlinear representation of information in a storage media. When introduced around the year 1965, the word "hypertext" had as one meaning "a body of written or pictorial material interconnected in such a complex way that it could not conveniently be presented or represented on paper." Since then interest in hypertext as a nonlinear form of information representation in an information management system has grown and now hypertext is an acknowledged approach to information management in which documentation can be displayed, for example, on the screen of a cathode ray tube device, as a network of nodes which are interconnected by links. Each node typically represents some quantum of information. The links interconnecting the nodes typically represent references or ancillary associations to other nodes of information in the hypertext network.

During the years, as the quantum and scope of the information included in a node increased, for example, information such as text, graphics, audio or video information is now commonly contained in a node, the term "hypermedia" has come into vogue and is commonly found to be used interchangeably with the term hypertext.

Information may be retrieved from an information management system for display on a CRT device. One common format for displaying the information comprises multiple, possibly overlapping, rectangular areas of the CRT, called windows. There are a number of known windowing systems available for creating interfaces between the information management system and a user of the information management system. One such windowing system is described in the publication by O. Jones entitled "Introduction to the X Window System," New Jersey: Prentice Hall, 1989. That system is called the X Window System.

A number of known windowing systems operate on information at a minutiae level of detail. In an effort to improve the user's operation of windowing systems, "toolkits" have been developed, which allow users to operate at a less detailed level. Toolkits typically include a plurality of "widgets" where a widget is a component of a user interface, which combines both, for example, the necessary semantics to form an object and the methods or actions that operate upon the object, and where a toolkit includes both a set of widgets and a set of routines, one set of routines being called "Xt Intrinsics" in the art, for manipulating and managing the widgets. See, for example, the text "AT&T OPEN LOOK (TM) Graphical User Interface: Programmer's Guide and Programmer's Reference Manual," (1989) for a complete description of a set of widgets. See also, for example, the text by D. A. Young, entitled "X Window Systems: Programming and Applicabons with Xt," New Jersey: Prentice Hall, 1989 for another description of the X Window System and a complete description of the Xt Intrinsics.

These different technologies have different advantages. Some problems remain. One such problem is that of discovering an arrangement to combine certain advantages of hypermedia information management systems with certain advantages of windowing systems.

### Summary of the Invention

This and other problems are solved in accord with the principles of our invention which includes a method, a system and apparatus for generating and using an information management system, the arrangement using a windowing system and, responsive to a set of intrinsics, generating a set of widgets and generating a hypermedia file, the file including a hierarchical ordering of objects, the objects including hypermedia lines; and generating hypermedia segments among the hypermedia lines. The arrangement also allows, among other things, encoding a plurality of special functions with parameters for defining such items as the file of information, whether text, pictorial, graphic or otherwise, to be included in a window, the location and size of the window in a display of the file, and a label for idenfying the generated segment. The arrangement also comprises encoding a special function with parameters for defining a program to be executed upon selection of the generated segment. The arrangement further includes, responsive to detecting one of a plurality of specially encoded functions, notifying a user of information from the hyperfile where the notifying information is correlated to the particular detected one of the specially encoded functions.

### Brief Description of the Drawings

Our invention should become more apparent from the following detailed description when taken in conjunction with the accompanying drawing in which:

FIG. 1 is a block diagram illustrating a CRT screen and a window of information that corresponds to a node of information and is useful in describing an example of an embodiment of the principles of our invention;

FIG. 2 is a block diagram illustrating a CRT screen and two windows of information that correspond to two nodes of information and is useful in describing an example of an embodiment of the principles of our invention;

FIG. 3 is a block diagram illustrating a CRT screen and three windows of information that correspond to three nodes of information and is useful in describing an example of an embodiment of the principles of our invention;

FIG. 4 is a C language set of instructions for implementing a hypermedia information management system of a type supporting the illustrations shown in FIGs. 1, 2, and 3;

FIG. 5 is a block diagram illustrating a CRT screen and a window of information that corresponds to a node of information in a hypermedia file having hypermedia lines and hypermedia segments and is useful in describing an example of an embodiment of the principles of our invention;

FIG. 6 is a flow chart, which is useful in describing a set method and an unset method in accord with the principles of our invention;

FIG. 7 is a flow chart, which is useful in describing a hypermedia segment locating process usable in the processes illustrated in FIGs. 6 and 8 and in accord with the principles of our invention; and

FIG. 8 is a flow chart, which is useful in describing a notify method in accord with the principles of our invention.

## Detailed Description

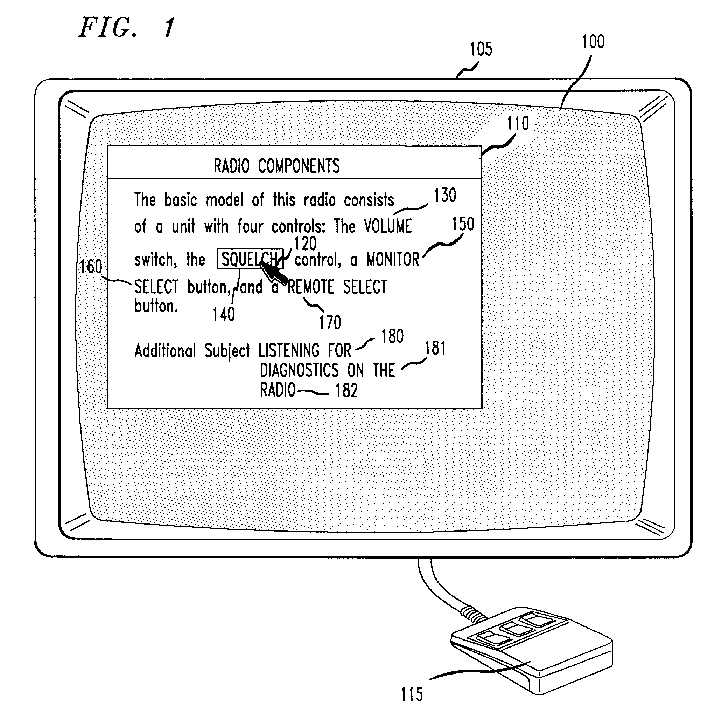

Referring to FIG. 1, screen 100 of a standard cathode ray tube display device 105 has shown thereon a window 110 with certain illustrative text from an information management system example. The user controls the movement of a cursor 120, which is illustratively shown as an arrow, by way of a mouse device 115 to any position on screen 100, but typically to any position within the text shown in window 110. On the one hand, window 110 corresponds to a node of a hypermedia network of hypermedia information. On the other hand, the capitalized text within the node, i.e. VOLUME 130, SQUELCH 140, MONITOR 150, SELECT 160, REMOTE SELECT 170, LISTENING FOR 180, DIAGNOSTICS ON THE 181, and RADIO 182, represents certain keywords and illustrates links between the node represented by window 110 and other nodes in the hypermedia network.

As an aside, it is worth mentioning here, but in any event it will be made more clear later on, that a first type of highlighting, in our example, the capitalized lettering of hypermedia keywords, may be used to distinctively emphasize a hypermedia link while a second type of highlighting, in our example, a rectangular box such as is shown around SQUELCH 140 may be used to distinctively emphasize that the cursor is positioned on a specific hypermedia link.

Continuing, by way of mouse device 115, the cursor 120 can be positioned and repositioned to any point on screen 100 and, more typically for this example, to any point within window 110, and hence to any point within the node represented by window 110. In our illustration, cursor 120 is positioned on hypermedia link SQUELCH 140. Assuming an interest exists in obtaining further information on the squelch control, mouse device 115 may be activated, also called "being selected" in the art, by, for example, pressing a button on the mouse responsive to which the information management system will transfer to a squelch control node.

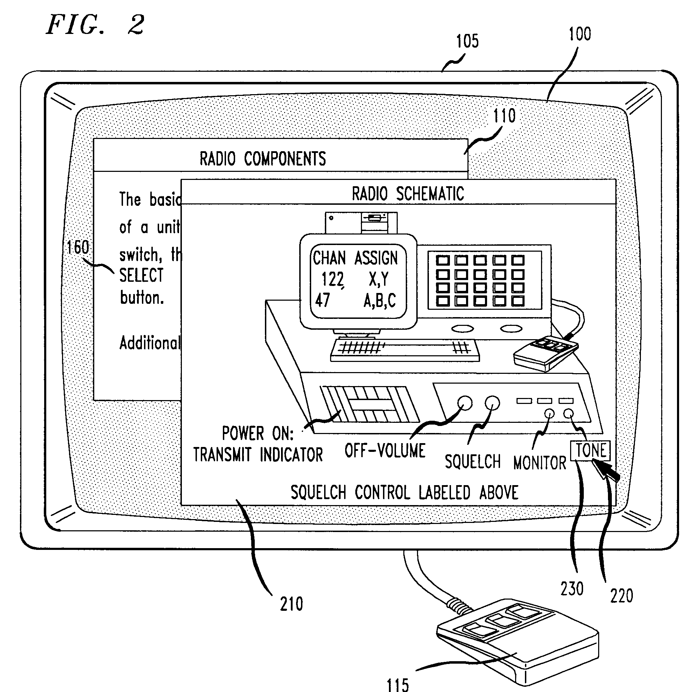

Turning now to FIG. 2, screen 100 has superimposed upon window 110 a second window, i.e. window 210, which, illustratively, recites information regarding the squelch control node. Window 210 then also represents the squelch control node. Note that screen 100 continues to display some, but not all, of the information from window 110. This result obtains when window 210 uses as much of the area of screen 100 as window 210 needs to display the information content of the node that it represents. The area that a window needs is a predetermined parameter, called window size, which is hereinafter described. The user can move cursor 220 (which is the same cursor as cursor 120 in FIG. 1 but is renumbered in FIG. 2 to show a different positioning of the cursor) by way of mouse device 115 to any position on screen 100, but more typically, either to any position within window 210 or to any position in the remaining visible portion of window 110, and, responsive to any hypermedia link being activated by way of mouse device 115, still another widow may be displayed on screen 100. In this example, assume cursor 220 is moved by way of mouse 115 to hypermedia link TONE 230 and thereafter mouse 115 is selected, or is activated.

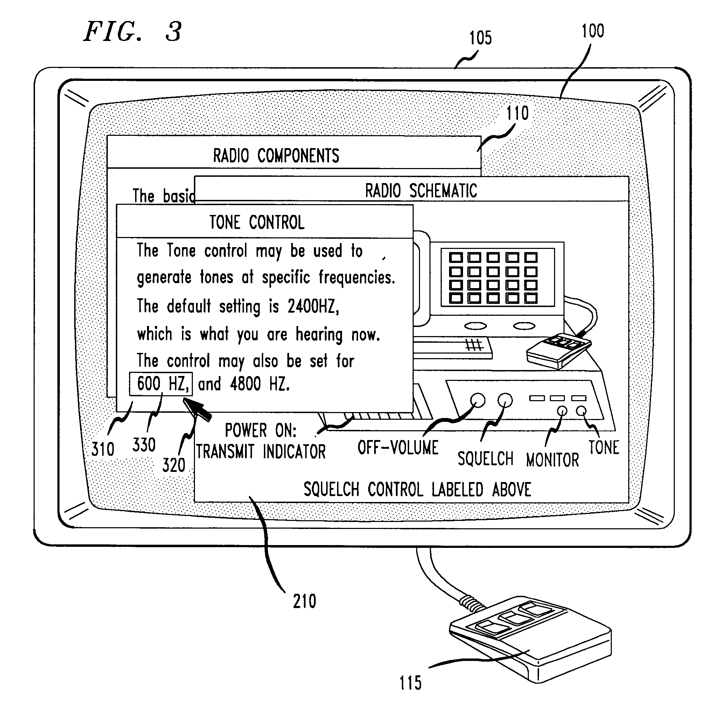

Turning now to FIG. 3, screen 100 now has superimposed upon windows 110 and 210 yet a third window, i.e. window 310, which recites information regarding the tone node. Note also that screen 100 has some, but not all, of the information from both window 110 and window 210, still visible. Again as before, the amount of information visible from the earlier nodes is related to the area needed to display the current node. The user can move cursor 320 (which is the same cursor as cursor 120 in FIG. 1 and as cursor 220 in FIG. 2 but is renumbered in FIG. 3 to show a different positioning of the cursor) by way of mouse device 115 to any position on screen 100, but more typically to any position within either window 310 or, for that matter, to any position in the remaining visible portions of either window 110 or window 210, and, responsive to any hypermedia link in any visible portion of any wholly or partially visible window being activated by way of mouse device 115, still another window may be displayed on screen 100. In this example, assume cursor 320 is moved to hypermedia link 600 HZ 330 and thereafter is activated. Inasmuch as a hypermedia node may include, among other things, both text and audio information, the activating of hypermedia link 330 may result in an audible sound, e.g. a 600 hertz sound may be generated by the information management system and provided to the user by way of a speaker arrangement, not shown.

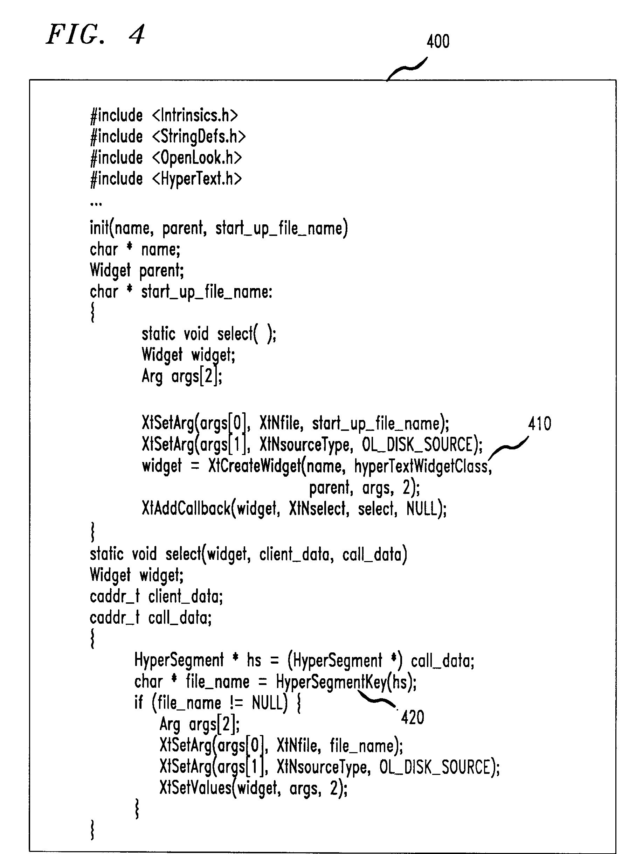

Turning to FIG. 4, there is illustrated in the C language a set of instructions 400 for implementing the hypermedia information management system aforedescribed for FIG. 1, FIG. 2 and FIG. 3. The set of instructions 400, which, but for two possible exceptions that will be described shortly, will be readily understood by a stilled artworker with knowledge of the C programming language and the Xt Intrinsics, illustrates one form of source code software embodiment of our sample hypermedia information system.

There may be two exceptions to the above statement: (1) a description of the element hyperTextWidgetClass 410 and (2) a description of the function HyperSegmentKey 420. The excepted element and function comprise illustrative embodiments of the principles of our invention.

Globally, hyperTextWidgetClass 410 refers to a new kind of widget class for use in hypermedia information management systems. It is untie known widgets in that hyperTextWidgetClass 410 advantageously implements hypermedia functionality within the X Window System.

In general, a widget class, as defined by the Xt Intrinsics, requires both a set of objects and a set of methods to define a widget. The set of objects typically represents a collection of data structures upon which the methods operate. The set of methods typically represents a collection of steps or actions, which operate on the objects.

We now describe the objects of hyperTextWidgetClass 410. Broadly, a hypermedia node comprises a hypermedia file of information. A hypermedia file is a first kind of object, which itself comprises a hierarchical ordering of other objects. More specifically, the hypermedia file is an ordered collection of a second kind of objects called hypermedia lines. A hypermedia line is an ordered collection of a third kind of objects called hypermedia segments. Some of the hypermedia lines may have no hypermedia segment in which case the segment is said to be an empty segment or to be a null segment or simply said to be empty. A hypermedia segment is the object representing a hypermedia link to another hypermedia node, or hypermedia file, in the hypermedia information system.

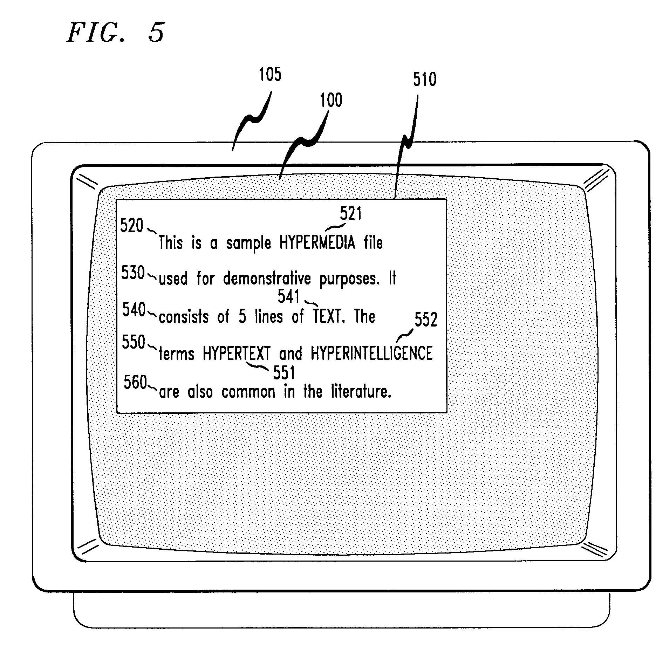

To illustrate the above by way of an example of a sample hypermedia file, refer to FIG. 5. Screen 100 of CRT 105 displays window 510 together with certain information in the node represented by window 510. The node, or hypermedia file, includes an ordered collection of hypermedia lines shown as the ordered collection of lines like line 520 followed by line 530 followed by line 540 followed by line 550 followed by line 560. Hypermedia line 520, in turn, includes one hypermedia segment 521, which is labeled HYPERMEDIA in capitalized letters in FIG. 5 in order to make it visually distinct in this example.

As an aside, a hypermedia segment is not required to be so labeled with capitalized letters. That is only one form of highlighting a hypermedia segment. Other labeling forms of identification include such visual highlighting techniques as color differences, blinking, font differences, et cetera, any of which could be employed so that the user could readily distinguish a hypermedia segment from other forms of information shown in the one or more hypermedia lines that comprise the window.

Continuing, note that hypermedia lines 530 and 560 have no hypermedia segment, i.e. lines 530 and 560 have null segments, while hypermedia line 540 includes one hypermedia segment 541, which is labeled TEXT in FIG. 5, and hypermedia line 550 includes two hypermedia segments 551 and 552, which are labeled HYPERTEXT and HYPERINTELLIGENCE, respectively.

To illustrate the generation of a sample hypermedia file, refer also to FIG. 5. We now describe the generation of a hypermedia file through the example of hypermedia line 520. A standard text editor may be used to generate each hypermedia line; however, a specially encoded function is included in a hypermedia line to identify a hypermedia segment within the hypermedia line. For example, the hypermedia file generator may type the words "This is a sample" for hypermedia line 520. Thereafter the generator could insert a specially encoded function, responsive to which hypermedia segment 521 can be generated. Following the specially encoded function, the generator may type the word "file" to complete hypermedia line 520.

Now as to the specially encoded function, consider a first function to have two parameters, or variables, in which the parameters, or variables, could themselves be second, third, etc. functions of other parameters, or variables. To illustrate, consider generation of hypermedia segment 521 and consider as a first function the following first function \k:

$$\text{\textbackslash k(\#(sample.file,25, 100,75,50),HYPERMEDIA)} \quad (1).$$

The first function \k shown above has two parameters, which are separated by a comma. The first parameter is itself a second function, which includes, among other thing, the window location and the window size. The second function is a function of the general form

$$\text{\#(filename,X,Y,width, height)} \quad (2)$$

In our specific example, the first parameter and second function is:

$$\text{\#(sample.file,25,100,75,50)} \quad (3)$$

As an aside, it is here convenient to note that, as a part of the description of the element hyperTextWidget-

Class 410, the function HyperSegmentKey 420 in FIG. 4 identifies the first parameter, which is here also the second function, to the user. That is, the argument (hs) of the function HyperSegrnenKey 420 is the first parameter of the first function \k.

Continuing, the second parameter of the first function is a hypermedia keyword or keywords such as the word HYPERMEDIA. The first function can be interpreted by the hypermedia widget to mean that it, i.e. the widget, should create a hypermedia segment whose method is described by the first parameter of the first function and whose object is described by the second parameter of the first function. Note that the first parameter is itself a second function of several parameters. The second function is identified and labeled above as #; the first parameter of the second function is sample.file; the second parameter is 25; the third parameter is 100; the fourth parameter is 75; and the fifth parameter is 50. The first parameter of the second function identifies the name of a file while the second and third parameters of the second function identify respectively an x-position and a y-position that defines the origin of the window to be generated while the fourth and fifth parameters of the second function define the window size, i.e. respectively, the number of units of width and the number of units of height for the window to be generated. Therefore, the second function can be interpreted by the hypermedia widget to mean that it, i.e. the widget, should display a new hypermedia window whose information content can be found in the file named sample.file and whose window position has an origin at (x,y) coordinates (25, 100) on screen 100 of CRT 105 and whose window size is 75 units in the x-direction and 50-units in the y-direction. Such a sample window is shown as window 310 in FIG. 3.

As an aside, and although other conventions could be used, we assume that screen 100 of CRT 105 is a two dimensional array with its geometrical origin located in the upper left comer of screen 100. The abscissa, or horizontal, or x-direction, begins at the left edge of screen 100 and is measurable in integer units from left-to-right. Similarly, the ordinate, or vertical, or y-direction, begins at the top edge of screen 100 and is measurable in integer units from top-to-bottom. Accordingly, any position on screen 100 can then be defined as having a set of coordinates (x,y).

Continuing with our description, it should be clear that functions other than the second function described above may be defined and used in the practice of the principles of our invention. For example, the aforedescribed second function could be replaced with a third function, which can be identified and labeled as:

%(filename,x,y,width,height)    (4)

The third function could be interpreted to mean that the widget, rather than displaying a hypermedia file of textual information in a window, would cause to be displayed in a window a picture file such as is shown in window 210 in FIG. 2.

Another example, could be a fourth function, which can be identified and labeled as

$(command)    (5)

The third function could be interpreted to cause a specific program to execute, for example, a program could be executed to generate audio tones and to extend the audio tones as audible sounds through a speaker arrangement, as was described earlier relative to window 310 in FIG. 3.

We next switch to a description of some examples of methods hyperTextWidgetClass 410 that could operate upon the objects.

To exemplify the related principles of our invention, we consider three examples of methods that could operate upon the objects. We refer to the methods, respectively, as (1) a set method; (2) an unset method; and (3) a notify method.

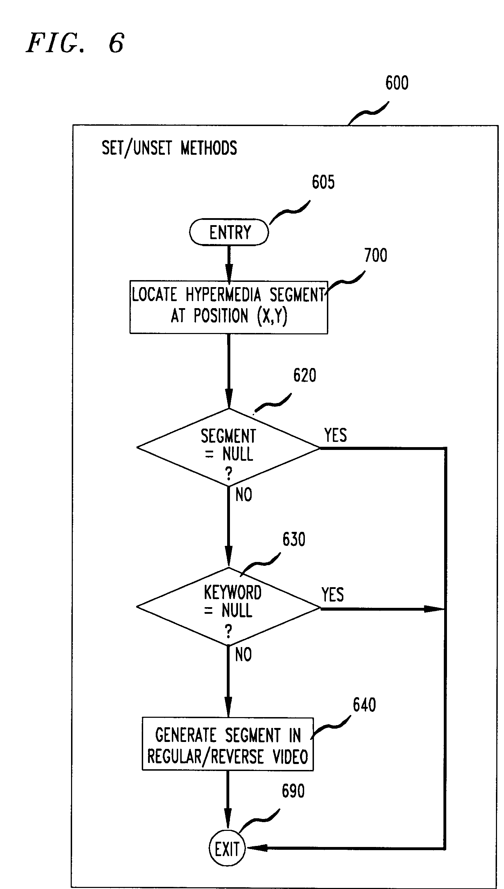

Relative to the set method 600 in FIG. 6, it usually is desirable that there be a coupling between a hypermedia segment displayed on screen 100 and the position of the cursor on the screen. That is, when the cursor is positioned on some object on the screen, it is obviously desirable to be able to communicate the relational fact of object and cursor to the controlling software. For example, if the object on the screen is a hypermedia segment, the mouse may be activated when the cursor is positioned on a hypermedia segment, responsive to which some action is undertaken to meet the requirements of the user. With that background, the set method is entered in response to detecting the cursor being positioned upon a hypermedia segment. For example, the hypermedia segments may be displayed with a first kind of highlighting such as capitalized letters. Upon detecting a coincidence between hypermedia segment and cursor, the set method may cause the hypermedia segment to be displayed with both a first kind of highlighting such as capital letters and with a second kind of highlighting such as in a reverse video, e.g. rather than black on white, the capital letters could be reversed to show white on black. In the specific examples, of FIGs. 1, 2 and 3 the first kind of highlighting of hypermedia segments is capital letters. Note segments 130, 140, 150, 160, 230, and 330, among others. In the specific examples, of FIGs. 1, 2 and 3 the second kind of highlighting of hypermedia segments is a rectangular box. Note segments 140, 230, and 330. It may be noted that a screen 100 may have a plurality of highlightings of the first kind but only one highlighting of the second kind, assuming there is only one cursor at a time displayed on the screen.

Relative to the unset method 600 in FIG. 6, the unset method is activated in response to detecting the cursor being removed from being positioned upon a hypermedia segment. For example, the hypermedia segments may be displayed with a first kind of highlighting such as capitalized letters. Upon detecting a coincidence between hypermedia segment and cursor, the set method could cause the capitalized letters and a second kind of highlighting for the hypermedia segment on which the cursor is positioned, e.g. the rectangular box shown on segments 140, 230 and 330, to be displayed. Thereafter, upon detecting the absence of a coincidence between hypermedia segment and cursor, the unset method could remove the rectangular box from the highlighted segment and could continue to cause the capitalized letters to be displayed.

Clearly, the set and unset methods repeat as a cursor is moved about in a window. Each window has its own set method and unset method.

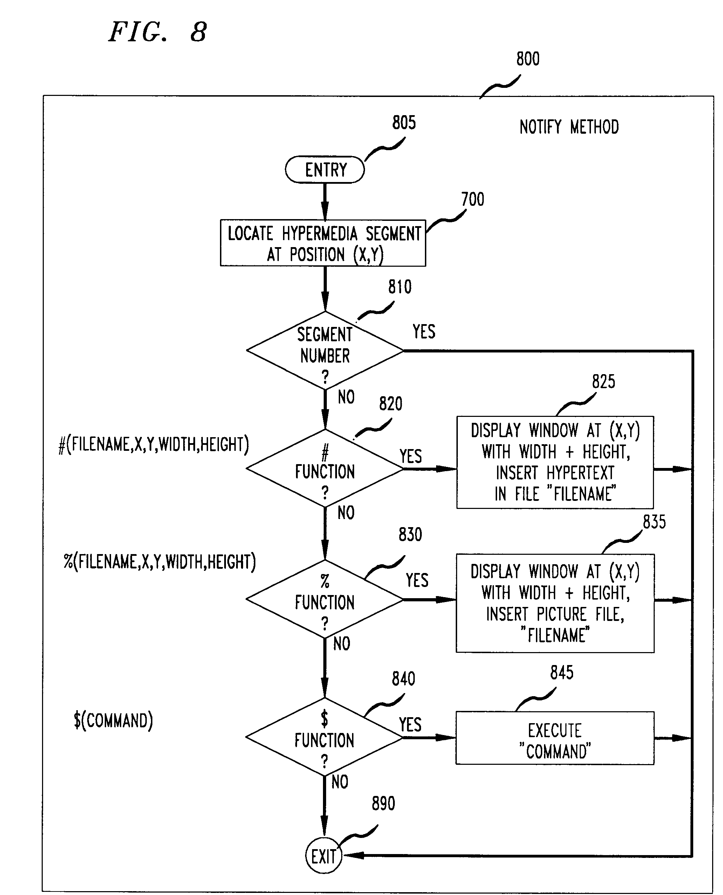

Relative to the notify method 800 in FIG. 8, actions are undertaken in response to selecting a hypermedia segment. Firstly, the hypermedia widget, responsive to detecting a coincidence of a hypermedia segment and cursor position, is enabled to respond to the selection of the hypermedia segment. Secondly, the hypermedia widget, responsive to detecting the hypermedia segment being selected by the user, executes the notify method by way of which a corresponding action is undertaken.

The following is an example of the hypermedia widget's actions in the use of the three methods. For example, in FIG. 1, cursor 120 is positioned over hypermedia segment SQUELCH 140. Responsive to detecting the coincidence of cursor and segment, the hypermedia widget activates the set method, which in this example results in a rectangular box being drawn around the segment SQUELCH 140. Responsive to the user selecting the segment SQUELCH 140, e.g. by activating mouse device 115, the notify method is entered, which results in window 210 in FIG. 2 being displayed. It is worth noting that, while the set method had been entered and had generated a second kind of highlighting around segment SQUELCH 140 in window 110, the widget enters the unset method in response to displaying window 210 because, at that instant, the cursor is no longer on the segment SQUELCH, the segment SQUELCH being hidden from the view of the user by window 210. Therefore the portion of window 110, which is hidden by a subsequent window like window 210, has no hypermedia segments that can be activated. On the other hand, any portion of window 110, which is not hidden by a subsequent window like window 210, and which has hypermedia segment(s) displayed, can be activated, for example, hypermedia segment SELECT 160, which is displayed both in window 110 and remains displayed in FIG. 2 after other portions of window 110 are overwritten. Finally, responsive to detecting the absence of a coincidence of cursor and segment, the hypermedia widget enters the unset method.

We now turn to a more specific description of the set, unset and notify methods through the use of FIGs. 6, 7, and 8.

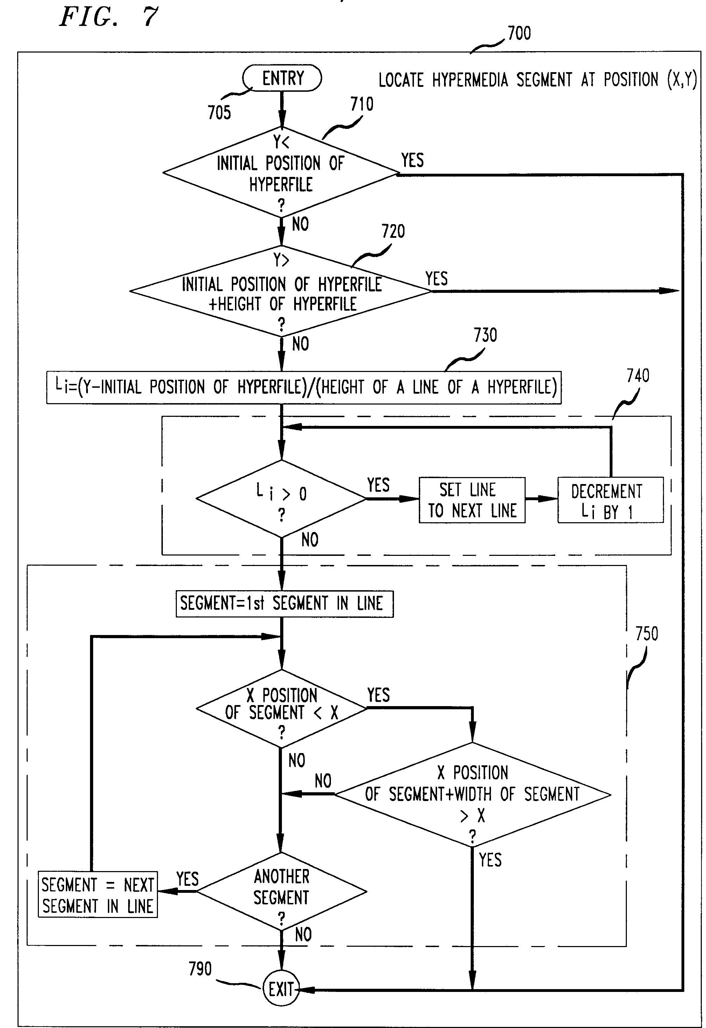

Recognizing that the set method and the unset method are logical complements of each other, we have combined the description of the two methods into a single flow chart shown in FIG. 6. Referring to FIG. 6, the set method is activated on entry 605. The (x,y) position of the cursor can be extended, for example, from the X Window System, to a process 700 for locating hypermedia segment, the details of which are more specifically shown in FIG. 7, which will hereinafter be described. Responsive to detecting whether or not there is a hypermedia segment, some informational checks may be desirable. For example, it may be desirable to test whether or not the cursor is positioned on a null segment 620 or a null keyword 630. It is not necessary to set or unset a segment if a null segment or a null keyword is detected. Otherwise, if the segment is neither a null segment nor includes a null keyword, then the set method would generate, while the unset method would logically reverse the generation of, a second type highlighting. For example, a rectangular box may be generated 640 by the set method and drawn around the hypermedia segment as was shown for SQUELCH 140 in FIG. 1, or TONE 230 in FIG. 2, or 600 HZ 330 in FIG. 3. Conversely, the unset method would remove the rectangular box from the window.

Again, it is worth noting that a first type of highlighting, in our example, capitalized letters of hypermedia keywords, may be used to distinctively emphasize a hypermedia segment while a second type of highlighting, in our example, a rectangular box or regular versus reverse video, may be used to distinctively emphasize that the cursor is positioned on a hypermedia segment.

Referring to FIG. 7, we now describe the process of locating a hypermedia segment at a (x,y) coordinate of a display. Note that the words in a window as shown on screen 100 two-dimensional having both an x-direction and a y-direction. Similarly, hypermedia keywords and hypermedia segments have a two-dimensional geometry. On entry 705, process 700 for locating the hypermedia segment situated at position (x,y), the position being provided by a window system such as the X Window System, informational check can be made for determining whether or not the y-position of the cursor is a vertical position above 710 the window for a hypermedia file or a vertical position below 720 the window for the hypermedia file. If the cursor is positioned either above or below the window, then the cursor is not positioned on a hypermedia segment within the window, and hence process 700 may be exited. As an aside, it may be noted that, even though the cursor has a y-position within the height boundaries of the window, the x-position of the cursor may be outside the window. Further tests will address that issue. However and continuing, let the symbol $L_i$ indicate the line number corresponding to the hypermedia line on which the cursor is positioned. Process 730, which assumes that all hypermedia lines are of the same height, generates a value for Li based on the y-position of the cursor and based on the predefined origin of the window. It should be noted that different hypermedia lines could have different heights and so the denominator in process 730 would change for the respective line numbers being identified. Process 740 is one form of generating a pointer to the hyperline, which may have the hypermedia segment on which the cursor is positioned. Process 750 thereafter checks each hypermedia segment in the hypermedia line on which the cursor is positioned to determine whether or not the x-position of the cursor is within the horizontal coordinates of the hypermedia segment being tested. Upon locating a hypermedia segment having coordinates and size that would include the cursor position, process 700 is exited with the identity of the hypermedia line and the hypermedia segment. If the hypermedia segment has zero width, the keyword associated with the segment is a null keyword. Upon not locating a hypermedia segment having coordinates and size that would include the cursor position, process 700 is exited with the identity of the hypermedia line and characterizes the hypermedia segment as a null segment.

Now we turn to a description of the notify method 800, which is illustrated in flow chart format in FIG. 8. As with the set and unset methods illustrated in FIG. 6 and described above, on entry 805 into notify method 800, firstly the hypermedia segment located at cursor position (x,y) is generated 700. Again, if a null segment is generated, no action is required. On the other hand, if a non-null segment is generated, there is in general some action which is required on behalf of the user. We have described a second function, labeled # and defined in equations (2) and (3) above, and a third function, labeled % and defined in equation (4) above, and a fourth function, labeled $ and defined in equation (5) above. Upon detecting the required action by virtue of the function recited as the first parameter of the first function, labeled as \k and defined in equation (1) above, notify method 800 generates a respective action 825, 835 or 845, for the respective second, third, or fourth function. Clearly, although we have described only three respective functions, other embodiments of the principles of our invention may include different or other functions.

Although the invention has been described and illustrated in detail, it is to be understood that the above description is presented primarily for the purpose of illustration and example. For brevity, only some alternative functions, for example, have been described. Still other functions and other variations of the principles of the invention will occur to those skilled in the art. Accordingly, the invention is not limited by or to the embodiments shown and described, but only by the appended claims.

## Claims

1. A method for generating and using an information management system, the method including using a windowing system and generating a set of widgets and
   CHARACTERIZED IN THAT
   the method further comprises the steps of:
   responsive to a set of intrinsics, generating a hypermedia file, the file including a hierarchical ordering of objects, the objects including hypermedia lines; and
   generating hypermedia segments among the hypermedia lines.

2. The method defined in claim 1 wherein the segment generating step comprises the step of:
   encoding a special function with parameters for defining the file to be included in a window, for defining the location and size of the window in a display of the file, for defining a label for identifying the generated segment.

3. The method defined in claim 2 wherein the segment generating step comprises the step of:
   generating textual information for display in the window.

4. The method defined in claim 2 wherein the segment generating step comprises the step of:
   generating pictorial information for display in the window.

5. The method defined in claim 1 wherein the segment generating step comprises the step of:
   encoding a special function with parameters for defining a program to be executed upon selection of the generated segment.

6. The method defined in claim 1 further comprising the steps of:
   responsive to detecting one of a plurality of specially encoded functions, notifying a user of information from the hyperfile, the information being correlated to the particular detected one of the specially encoded functions.

7. A system for generating and using an information management system, the system including means for using a windowing system and means for generating a set of widgets and
   CHARACTERIZED IN THAT
   the system further comprises:
   means, responsive to a set of intrinsics, for generating a hypermedia file, the file including a hierarchical ordering of objects, the objects including hypermedia lines; and
   means for generating hypermedia segments among the hypermedia lines.

8. The system defined in claim 7 wherein the segment generating means comprises:
        means for encoding a special function with parameters for defining the file to be included in a window, for defining the location and size of the window in a display of the file, for defining a label for identifying the generated segment.

9. The system defined in claim 8 wherein the segment generating means further comprises:
        means for generating textual information for display in the window.

10. The system defined in claim 8 wherein the segment generating means further comprises:
        means for generating pictorial information for display in the window.

11. The system defined in claim 7 wherein the segment generating means comprises:
        means for encoding a special function with parameters for defining a program to be executed upon selection of the generated segment.

12. The system defined in claim 7 further comprising:
        means, responsive to detecting one of a plurality of specially encoded functions, for notifying a user of information from the hyperfile, the information being correlated to the particular detected one of the specially encoded functions.

13. Apparatus for generating and using an information management system, the apparatus including means for using a windowing system and means for generating a set of widgets and wherein the improvement comprises:
        means, responsive to a set of intrinsics, for generating a hypermedia file, the file including a hierarchical ordering of objects, the objects including hypermedia lines; and
        means for generating hypermedia segments among the hypermedia lines.

14. The apparatus defined in claim 13 wherein the segment generating means comprises:
        means for encoding a special function with parameters for defining the file to be included in a window, for defining the location and size of the window in a display of the file, for defining a label for identifying the generated segment.

15. The apparatus defined in claim 14 wherein the segment generating means further comprises:
        means for generating textual information for display in the window.

16. The apparatus defined in claim 14 wherein the segment generating means further comprises:
        means for generating pictorial information for display in the window.

17. The apparatus defined in claim 13 wherein the segment generating means comprises:
        means for encoding a special function with parameters for defining a program to be executed upon selection of the generated segment.

18. The apparatus defined in claim 13 further comprising:
        means, responsive to detecting one of a plurality of specially encoded functions, for notifying a user of information from the hyperfile, the information being correlated to the particular detected one of the specially encoded functions.

*FIG. 1*

*FIG. 2*

## FIG. 3

RADIO COMPONENTS

The basic

RADIO SCHEMATIC

TONE CONTROL

The Tone control may be used to
generate tones at specific frequencies.
The default setting is 2400HZ,
which is what you are hearing now.
The control may also be set for
600 HZ, and 4800 HZ.

POWER ON:
TRANSMIT INDICATOR     OFF-VOLUME     SQUELCH  MONITOR     TONE

SQUELCH CONTROL LABELED ABOVE

## FIG. 4

400

```
#include <Intrinsics.h>
#include <StringDefs.h>
#include <OpenLook.h>
#include <HyperText.h>
...
init(name, parent, start_up_file_name)
char * name;
Widget parent;
char * start_up_file_name:
{
        static void select( );
        Widget widget;
        Arg args[2];

        XtSetArg(args[0], XtNfile, start_up_file_name);              410
        XtSetArg(args[1], XtNsourceType, OL_DISK_SOURCE);
        widget = XtCreateWidget(name, hyperTextWidgetClass,
                                parent, args, 2);
        XtAddCallback(widget, XtNselect, select, NULL);
}
static void select(widget, client_data, call_data)
Widget widget;
caddr_t client_data;
caddr_t call_data;
{
        HyperSegment * hs = (HyperSegment *) call_data;
        char * file_name = HyperSegmentKey(hs);
        if (file_name != NULL) {                          420
            Arg args[2];
            XtSetArg(args[0], XtNfile, file_name);
            XtSetArg(args[1], XtNsourceType, OL_DISK_SOURCE);
            XtSetValues(widget, args, 2);
        }
}
```

FIG. 5

520 — This is a sample HYPERMEDIA file  
— 521

530 — used for demonstrative purposes. It  
— 541

540 — consists of 5 lines of TEXT. The  
— 552

550 — terms HYPERTEXT and HYPERINTELLIGENCE  
— 551

560 — are also common in the literature.

## *FIG. 6*

600

SET/UNSET METHODS

605

( ENTRY )

700

LOCATE HYPERMEDIA SEGMENT
AT POSITION (X,Y)

620

SEGMENT
= NULL
?

YES

NO

630

KEYWORD
= NULL
?

YES

NO

640

GENERATE SEGMENT IN
REGULAR/REVERSE VIDEO

690

(EXIT)

## FIG. 7

700

LOCATE HYPERMEDIA SEGMENT AT POSITION (X,Y)

ENTRY — 705

710 — Y< INITIAL POSITION OF HYPERFILE ? — YES

NO

720 — Y> INITIAL POSITION OF HYPERFILE +HEIGHT OF HYPERFILE ? — YES

NO

730 — $L_i$=(Y−INITIAL POSITION OF HYPERFILE)/(HEIGHT OF A LINE OF A HYPERFILE)

740

$L_i > 0$ ? — YES → SET LINE TO NEXT LINE → DECREMENT $L_i$ BY 1

NO

SEGMENT=1st SEGMENT IN LINE

750

X POSITION OF SEGMENT < X ? — YES → X POSITION OF SEGMENT+WIDTH OF SEGMENT > X ? — YES

NO

NO

SEGMENT = NEXT SEGMENT IN LINE ← YES — ANOTHER SEGMENT ? — NO

790 — EXIT

## FIG. 8